Europäisches Patentamt

European Patent Office

Office européen des brevets

(19)

(11) **EP 0 722 238 B1**

(12) **FASCICULE DE BREVET EUROPEEN**

(45) Date de publication et mention
de la délivrance du brevet:
**07.08.2002 Bulletin 2002/32**

(51) Int Cl.⁷: **H04L 27/20**

(21) Numéro de dépôt: **96400025.1**

(22) Date de dépôt: **05.01.1996**

(54) **Estimateur d'un défaut de fonctionnement d'un modulateur en quadrature et étage de modulation l'utilisant**

Einschätzergerät für Funktionsfehler eines Quadraturmodulators, und dieses verwendende Modulationsstufe

Estimator of errors in the functionality of a quadrature modulator, and modulation stage which uses it

(84) Etats contractants désignés:
**BE DE ES GB IT SE**

(30) Priorité: **11.01.1995 FR 9500261**

(43) Date de publication de la demande:
**17.07.1996 Bulletin 1996/29**

(73) Titulaire: **ALCATEL**
**75008 Paris (FR)**

(72) Inventeurs:
• **Kowalik, Francis**
**F-60340 Villers sous St. Leu (FR)**

• **Isard, Marc**
**F-78100 St. Germain en Laye (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
**EP-A- 0 503 588        EP-A- 0 570 979**
**US-A- 5 367 271**

**Description**

Le domaine de l'invention est celui des émetteurs de signaux à $2^n$ états de phase, obtenus par modulation par déplacement de phase (MDP-M, modulation de phase à M états) ou par modulation d'amplitude et de phase (MDAP-M, modulation d'amplitude et de phase à M états). L'invention concerne plus précisément un estimateur d'un défaut de fonctionnement d'un modulateur en quadrature comprenant deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé. Les signaux porteurs sont en principe en quadrature de phase et sont soit à une fréquence intermédiaire, soit à une fréquence porteuse.

L'invention a notamment pour objet un estimateur pouvant être utilisé dans une boucle d'asservissement pour modifier l'écart de phase entre les signaux porteurs et/ou annuler les résidus de signaux porteurs non modulés dans le signal modulé. L'invention trouve un intérêt tout particulier pour le contrôle d'un étage de modulation fonctionnant dans une large bande de fréquences.

Plusieurs documents peuvent être mentionnés pour illustrer l'arrière plan technologique. D1 = EP 570 979 A1 décrit un circuit de modulation en quadrature, comprenant un déphaseur de 90°, et un déphaseur réglable mais de faible valeur. Ce déphaseur de faible valeur est commandé par une boucle d'asservissement pour maintenir le déphasage de sortie à 90°. D2 = EP 503 588 décrit un modulateur d'amplitude en quadrature avec une correction de distorsions, dues à un socle de tension continue, d'une part, et à l'équilibre d'amplitudes des signaux en quadrature, d'autre part. D3 = US 5 367 271 décrit un modulateur en quadrature ayant des circuits de compensation d'amplitude et de déphasage.

Dans le cas d'une modulation à $2^n$ états de phase, si l'on veut réaliser une représentation de type coordonnées cartésiennes dans un espace de signaux, on peut placer les états de phase de façon équi-répartie par rapport à des axes correspondant à des signaux porteurs orthogonaux X et Y. On obtient alors une constellation qui correspond à la représentation vectorielle des états de signaux porteurs dont les projections sur les axes X et Y donnent les coordonnées de l'extrémité du vecteur représenté.

Il peut cependant arriver qu'une constellation soit décentrée et/ou déphasée par rapport à ces axes, ce qui entraîne une dégradation des performances de l'émetteur.

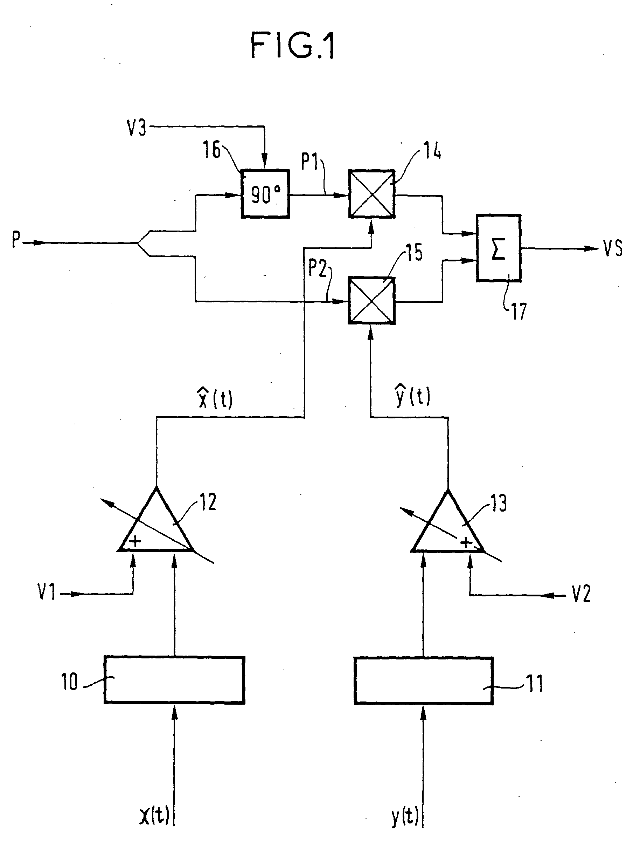

La figure 1 représente un étage de modulation d'un émetteur de signaux à $2^n$ états de phase de l'art connu. Un étage de ce type est décrit dans le brevet français n°2.641.923.

Deux signaux modulants x(t) et y(t) à transmettre sont appliqués à des convertisseurs numériques/analogiques 10 et 11 dont les sorties sont reliées respectivement à des entrées d'amplificateurs 12 et 13 à gain variable qui reçoivent sur une autre entrée deux tensions de réglage V1 et V2. Les signaux de sortie $\hat{x}(t)$ et $\hat{y}(t)$ des amplificateurs 12 et 13 constituent des signaux modulants qui sont appliqués à deux mélangeurs 14 et 15 recevant par ailleurs sur leur autre accès chacun un signal porteur P1, P2, ces signaux porteurs étant en principe déphasés d'un angle de 90° l'un par rapport à l'autre. Cet angle de déphasage peut être ajusté à l'aide d'une tension V3 appliquée à un déphaseur de 90° réglable référencé 16 recevant, comme le mélangeur 15, un signal porteur P issu d'un oscillateur local. Les signaux de sortie des mélangeurs 14 et 15 sont appliqués à un sommateur 17 fournissant un signal modulé VS à transmettre à $2^n$ états de phase. Le signal VS peut être en fréquence intermédiaire ou en hyperfréquences.

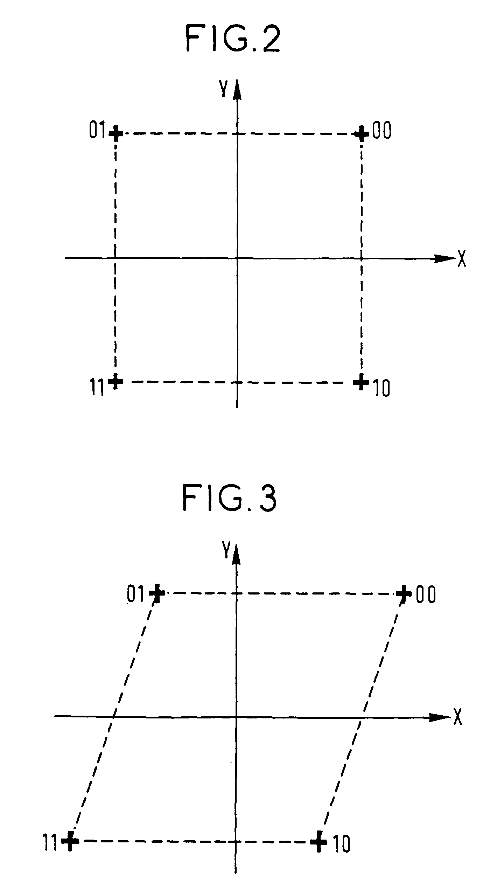

La constellation du signal VS est représentée à la figure 2. Cette constellation correspond à celle d'un signal de type MDP-4 (Modulation de phase à 4 états de phase ou QPSK en anglais, Quaternary Phase Shift Keying) idéal.

Les croix, correspondant à des symboles transmis, représentent les différents états de phase du signal VS. La constellation est ici centrée, c'est à dire que les projections des vecteurs, correspondant aux différents états, sur les axes X et Y sont, deux à deux, de même amplitude et en opposition de phase.

Cependant, il arrive que la quadrature des signaux porteurs appliqués aux mélangeurs de la figure 1 ne soit pas tout à fait respectée, ces signaux porteurs étant alors déphasés de 90° $\pm \Delta F$, où $\Delta F$ correspond à un décalage angulaire indésirable. Si un tel déphasage angulaire existe, la constellation du signal VS est par exemple celle représentée à la figure 3. Le défaut de quadrature entraîne une dissymétrie de la constellation qui dégrade les qualités de la liaison de transmission entre l'émetteur équipé de l'étage de modulation et un récepteur recevant le signal VS. Pour compenser ce défaut de quadrature, on agit sur la tension V3.

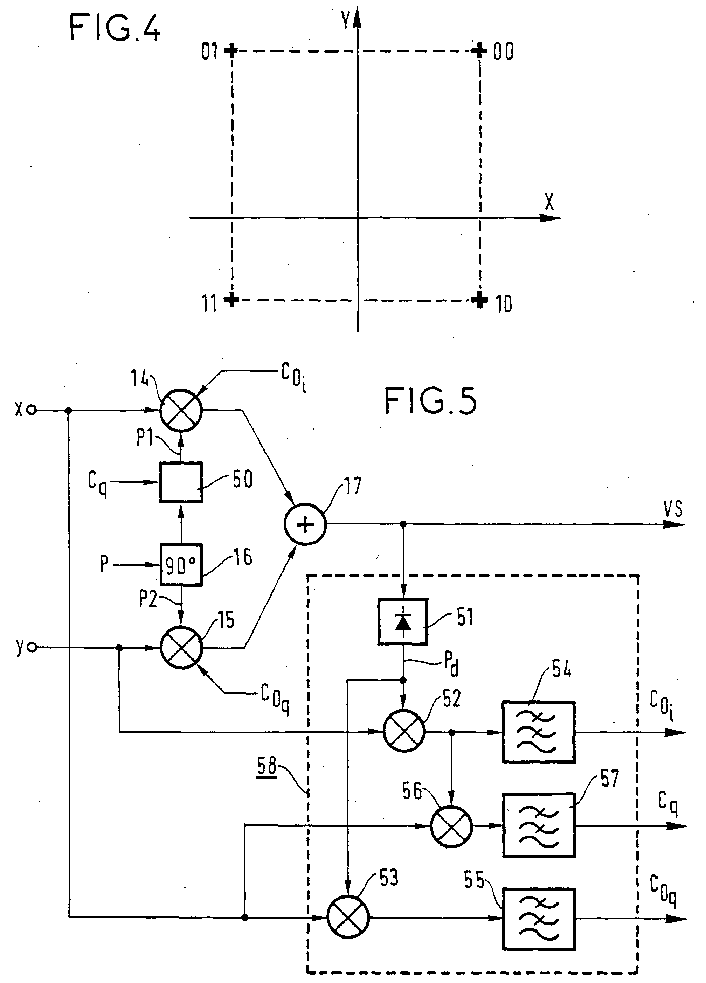

La figure 4 représente une constellation MDP-4 d'un signal VS issu d'un étage de modulation présentant un défaut de symétrie de ses mélangeurs. Un défaut de symétrie des mélangeurs se traduit par un résidu de signaux porteurs non modulés dans le signal modulé et l'énergie est inégalement répartie. Pour remédier à cet inconvénient, on agit sur les tensions V1 et V2.

La demande de brevet précitée décrit un dispositif permettant de conserver à la constellation du signal VS une allure telle que représentée à la figure 2. Ce dispositif est un estimateur remplaçant les réglages manuels effectués dans l'état de la technique.

L'estimateur décrit dans cette demande de brevet est de type numérique et prend en compte les signaux modulants x(t) et y(t), ainsi que le signal modulé VS. Le signal modulé VS subit une détection d'amplitude et est numérisé pour être comparé aux signaux x(t) et y(t). Un microprocesseur pilote des compteurs-décompteurs suivis de convertisseurs numériques/analogiques dont les sorties constituent les tensions de commande V1 à V3.

Cependant, cet estimateur présente plusieurs inconvénients :

- comme le traitement est effectué en numérique, on est limité par la fréquence maximale de fonctionnement du microprocesseur. La correction de la constellation prend donc un certain temps ;
- la quantification du signal modulé VS, réalisée par le convertisseur analogique/numérique, entraîne un manque de précision et il n'est pas possible d'effectuer un réglage très fin, par exemple de la quadrature ;
- le coût des convertisseurs analogiques/numériques et numériques/analogiques est croissant avec le débit numérique ;
- sa réalisation est complexe ;
- il est prévu pour fonctionner à un débit numérique donné, à une fréquence porteuse donnée et pour un type de générateur donné.

La présente invention a notamment pour objectif de remédier à ces inconvénients.

Plus précisément, un des objectifs de l'invention est de fournir un estimateur d'un défaut de fonctionnement d'un modulateur en quadrature, ce défaut de fonctionnement étant un résidu de signaux porteurs dans le signal modulé et/ou un défaut de quadrature entre les signaux issus des mélangeurs, cet estimateur pouvant être avantageusement utilisé dans un modulateur en quadrature fonctionnant dans une large bande de fréquences.

Cet objectif, ainsi que d'autres qui apparaîtront par la suite, est atteint grâce à un estimateur d'un défaut de fonctionnement d'un modulateur en quadrature comprenant deux mélangeurs auxquels sont appliqués deux signaux porteurs ainsi qu'à chacun de ces mélangeurs un signal modulant, les signaux de sortie des mélangeurs étant appliqués à un sommateur pour constituer un signal modulé.

Selon l'invention, cet estimateur comporte

- des moyens de détection de la puissance instantanée du signal modulé ;
- des moyens de multiplication de la puissance instantanée détectée par l'un au moins des signaux modulants ;
- des moyens d'intégration du résultat de cette multiplication,

les moyens d'intégration fournissant un signal indicatif du défaut de fonctionnement du modulateur.

Dans un mode de réalisation avantageux, le défaut de fonctionnement du modulateur est un résidu des signaux porteurs dans le signal modulé et, dans ce cas, les moyens de multiplication sont au nombre de deux pour multiplier la puissance instantanée par chacun des signaux modulants pour fournir, après intégration, deux signaux représentatifs du résidu de signaux porteurs dans le signal modulé.

Dans un autre mode de réalisation, éventuellement complémentaire du précédent, le défaut de fonctionnement du modulateur est un défaut de quadrature entre les signaux issus des mélangeurs et les moyens de multiplication multiplient dans ce cas la puissance instantanée détectée par les signaux modulants pour fournir, après intégration, un signal représentatif de l'écart de phase entre les signaux issus des mélangeurs.

Les signaux modulants appliqués aux moyens de multiplication peuvent éventuellement être remplacés par leurs signes.

L'invention concerne également un étage de modulation en quadrature coopérant avec un tel estimateur, ainsi qu'un émetteur comportant un tel étage de modulation.

D'autres caractéristiques et avantages de l'invention apparaîtront à la lecture de la description suivante de plusieurs modes de réalisation préférentiels, donnés à titre illustratif et non limitatif, et des dessins annexés, dans lesquels :

- la figure 1 représente un étage de modulation d'un émetteur de signaux à $2^n$ états de phase de l'art connu ;
- la figure 2 représente un constellation idéale d'un signal de type MDP-4 ;
- la figure 3 représente une constellation d'un signal modulé en MDP-4 où les signaux porteurs ne sont pas en quadrature de phase ;
- la figure 4 représente une constellation d'un signal modulé en MDP-4 où le signal modulé comporte un résidu de signaux porteurs non modulés ;
- la figure 5 est un schéma synoptique d'un modulateur en quadrature piloté par un estimateur selon l'invention ;
- la figure 6 est un schéma d'un autre mode de réalisation de l'estimateur selon l'invention, cet estimateur pilotant également le fonctionnement d'un modulateur en quadrature.

Les figures 1 à 4 ont été décrites précédemment en référence à l'état de la technique.

Afin de permettre une correction d'un défaut de fonctionnement d'un modulateur en quadrature, la présente invention propose de corréler la puissance du signal modulé avec l'un au moins des signaux modulants pour fournir un signal indicatif de ce défaut de fonctionnement. L'invention repose donc sur l'exploitation des caractéristiques intrinsèques d'un signal modulé en quadrature de phase.

De manière générale, un signal modulé en quadrature de phase s'écrit :

$$Z = x.\cos(2\pi\omega_0 t + \varphi_0) - y.\sin(2\pi\omega_0 t + \varphi_0)$$

où x et y correspondent respectivement aux signaux modulants x(t) et y(t) (simplification d'écriture), $\omega_0$ est la pulsation des signaux porteurs et $\varphi_0$ la phase.

Pour une modulation numérique, on a : $E(x) = E(y) = 0$, où $E(.)$ correspond à l'espérance mathématique. De même, $E(x^2) = E(y^2) = A^2$ où A est l'amplitude des signaux modulants.

Un premier objectif de l'invention est de fournir un estimateur de l'écart de phase entre les signaux issus des mélangeurs du modulateur en quadrature. Cet estimateur a pour fonction de fournir un signal indicatif du défaut de quadrature entre les signaux avant sommation.

Un défaut de quadrature est dû soit à un retard $\tau_0$ entre les chemins d'accès des signaux porteurs, soit entre les deux signaux porteurs modulés. On a donc, avant sommation, un défaut de quadrature $\theta_q = 2\pi\omega_0\tau_0$. Ce défaut de quadrature dépend de. la pulsation $\omega_0$ est donc de la fréquence du signal porteur.

En conséquence, du fait de ce défaut de quadrature, la voie x est modulée par $\cos(2\pi\omega_0 t + \varphi_0)$ alors que la voie y l'est par $\sin(2\pi\omega_0 t + \varphi_0 + \theta_q)$.

Une second objectif de l'invention est de fournir un estimateur du résidu de signaux porteurs dans le. signal modulé. Cet estimateur a pour fonction de fournir un signal permettant d'annuler la présence de ces signaux porteurs dans le signal modulé. Classiquement, dans le cas où les signaux porteurs sont des signaux hyperfréquences (modulation directe), la coopération de l'estimateur et du modulateur permet d'annuler la porteuse dans le signal transmis. Il s'agit alors d'un dispositif d'annulation de porteuse.

De manière générale, un résidu de signaux porteurs dans le signal modulé se traduit par une résurgence au milieu du spectre modulé d'une raie à la fréquence des signaux porteurs. Cette résurgence peut être provoquée par :

- un défaut d'équilibrage des mélangeurs, laissant alors passer une fraction des signaux porteurs pour un signal modulant de 0 volt ;
- un défaut d'isolation des sorties des mélangeurs par rapport à l'oscillateur local.

Ces défauts peuvent être caractérisés par un décalage résiduel de tension continue $O_i$, $O_q$ pour chaque signal modulant x, y. Le signal modulé s'écrit alors :

$$Z = B.(x + O_i).\cos(2\pi\omega_o t + \varphi_o) - C.(y + O_q).\sin(2\pi\omega_o t + \varphi_o + \theta_q) \qquad (1)$$

en introduisant la possibilité d'une différence d'amplitude (B et C) entre les signaux modulants x et y.

On a ici également introduit le déphasage $\theta_q$ qui représente le défaut de quadrature entre les signaux issus des mélangeurs.

La relation (1) donne alors :

$$Z = [B.(x + O_i) - C.(y + O_q).\sin\theta_q].\cos(2\pi\omega_o t + \varphi_o)$$

$$- C.(y + O_q).\cos\theta_q.\sin(2\pi\omega_o t + \varphi_o)$$

La puissance instantanée détectée $P_d$ en sortie du modulateur s'écrit :

$$P_d = B^2.(x + O_i)^2 - 2\sin\theta q.B.C.(x + O_i).(y + O_q)$$

$$+ \sin 2\theta_q.C^2.(y + O_q)^2 + C^2.(y + O_q)^2.\cos^2\theta_q$$

$$= B^2.(x + O_i)^2 + C^2.(y + O_q)^2 - 2\sin\theta q.B.C.(x + O_i).(y + O_q) \qquad (2)$$

On voit apparaître dans le troisième terme de la relation (2) une expression représentative du défaut de quadrature $\theta_q$ et des offsets $O_i$ et $O_q$ des voies x et y. Le signe de ce terme est donné par celui du produit $\sin\theta_q.(x + O_i).(y + O_q)$. La puissance du signal modulé est donc modulée par

ces défauts.

L'expression de la puissance $P_d$ peut être restreinte aux termes du premier ordre en négligeant les produits du second ordre $O_i^2$, $O_q^2$, $O_i.O_q$, ainsi que $O_i.\sin\theta_q$ et $O_q.\sin\theta_q$. D'où l'expression réduite :

$$P_d \approx B^2.(x^2 + 2x.O_i) + C^2.(y^2 + 2y.O_q) - 2\sin\theta_q.B.C.x.y$$

En corrélant $P_d$ au signal modulant x, il vient par simple multiplication :

$$x.P_d = B^2.(x^3 + 2x^2 O_i) + x.C^2.(y^2 + 2y.O_q) - 2\sin\theta_q.B.C.x^2.y$$

Le lissage temporel de ce produit par intégration ne laisse subsister que les termes carrés en x et en y puisque $E(x) = E(y) = 0$.

On a donc une estimation de l'offset pour le signal modulant x donnée par le coefficient :

$$C_{O_i} = E(x.P_d) \approx 2.B^2.|E(x^2)|.O_i \tag{3}$$

Cette expression $C_{O_i}$ est proportionnelle à l'offset affectant le signal modulant x appliqué au mélangeur correspondant.

De même, en multipliant $P_d$ par y, on obtient une estimation de l'offset pour le signal modulant y donnée par :

$$C_{O_q} = E(y.P_d) \approx 2.C^2.|E(y^2)|.O_q \tag{4}$$

Par ailleurs, en multipliant $P_d$ par les signaux modulants x et y, on obtient une estimation Cq de l'écart de phase entre les signaux modulés avant sommation :

$$C_q = E(x.y.P_d) = -2.B.C.\sin\theta_q.|E(x^2)|.|E(y^2)| \tag{5}$$

Ainsi, trois constatations s'imposent :

i - la multiplication de $P_d$ par le signal modulant x fournit, après intégration, un signal indicatif de l'offset affectant le signal modulant x ;

ii - la multiplication de $P_d$ par le signal modulant y fournit, après intégration, un signal indicatif de l'offset affectant le signal modulant y ;

iii - la multiplication de $P_d$ par les signaux modulants x et y fournit, après intégration, un signal indicatif de l'écart de phase entre les signaux modulés avant sommation.

On peut par ailleurs remarquer que des estimateurs signés peuvent être obtenus grâce aux mêmes propriétés :

$$S_{O_i} = E[\text{sgn}(x).P_d] = 2.B^2.E(|x|).O_i \tag{6}$$

$$S_{O_q} = E[\text{sgn}(y).P_d] = 2.C^2.E(|y|).O_q \tag{7}$$

$$S_q = E[\text{sgn}(x).\text{sgn}(y).P_d] = -2.B.C.\sin\theta_q.E(|x|).E(|y|) \tag{8}$$

Ainsi, il est possible de ne considérer que les signes des signaux modulants x et y, généralement égaux à +1 et -1, au lieu de considérer leurs amplitudes.

Une réalisation pratique d'un estimateur selon l'invention est donnée à la figure 5 qui est un schéma synoptique d'un modulateur en quadrature piloté par un estimateur selon l'invention.

Le modulateur en quadrature représenté comporte de manière classique deux mélangeurs 14, 15 auxquels sont appliqués deux signaux porteurs P1 et P2 obtenus à partir d'un signal porteur P. A chacun des mélangeurs est appliqué un signal modulant x, y. Les signaux de sortie des mélangeurs 14 et 15 sont appliqués à un sommateur 17 pour constituer un signal modulé VS. Ce signal modulé VS est soit en fréquence intermédiaire, soit en hyperfréquences.

L'estimateur de l'invention, généralement référencé par 58, comporte :

- des moyens 51 de détection de la puissance instantanée $P_d$ du signal modulé VS ;
- des moyens de multiplication 52, 53, 56 de la puissance instantanée $P_d$ détectée par l'un au moins des signaux modulants x, y ;
- des moyens d'intégration 54, 55, 57 du résultat de cette multiplication, ces moyens d'intégration 54, 55, 57 fournissant un signal $C_{O_i}$, $C_{O_q}$, Cq indicatif d'un défaut de fonctionnement du modulateur.

Plus précisément, comme il a été vu précédemment, la multiplication de la puissance détectée $P_d$ par le signal modulant x, cette multiplication étant réalisée par le multiplieur 53, fournit, après intégration par le filtre 55, un signal $C_{O_i}$ correspondant à l'estimation de l'offset affectant le signal modulant x. Par ailleurs, la multiplication de la puissance détectée $P_d$ par le signal modulant y, cette multiplication étant réalisée par le multiplieur 52, fournit, après intégration par le filtre 54, un signal $C_{O_q}$ correspondant à l'estimation de l'offset affectant le signal modulant y. Les signaux $C_{O_i}$ et $C_{O_q}$ sont respectivement appliqués aux mélangeurs 14 et 15 pour corriger les offsets introduits par ces mélangeurs. Il peut par exemple s'agir d'entrées de réglage d'offsets. Il est également possible d'utiliser ces signaux en remplacement des tensions V1 et V2 de la figure 1.

De plus, la multiplication en 56 de $P_d$ par x et par y fournit, après intégration par le filtre 57, une estimation Cq de l'écart de phase entre les signaux porteurs avant sommation. Cette estimation Cq peut être appliquée à un déphaseur ajustable 50 inséré entre le déphaseur de 90° référencé 16 et l'un des mélangeurs 14, 15. On assure ainsi que les signaux porteurs P1 et P2 sont en quadrature de phase dans une large bande de fréquences.

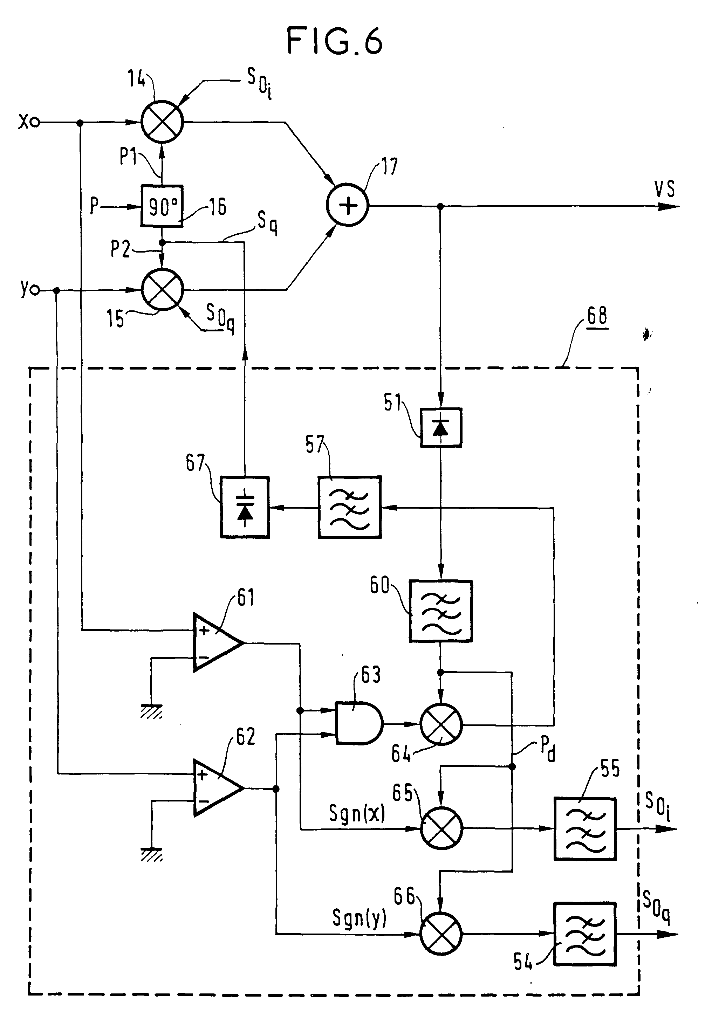

La figure 6 est un schéma d'un autre mode de réalisation de l'estimateur selon l'invention, cet estimateur pilotant également le fonctionnement d'un modulateur en quadrature.

L'estimateur de la figure 6, généralement référencé par 68, se distingue de celui de la figure 5 en ce que les signaux d'estimation sont de type signé. On exploite alors les relations 6, 7 et 8 précédentes.

Les signaux modulants x et y sont appliqués à des comparateurs 61 et 62 recevant comme tension de référence 0 volt. Les signaux de sortie des comparateurs 61 et 62 fournissent respectivement sgn(x) et sgn(y). Ils sont d'une part appliqués à une porte Et 63 fournissant sgn(x).sgn(y) à un multiplieur 64 et d'autre part à deux multiplieurs 65 et 66. La puissance instantanée $P_d$ est obtenue en sortie d'un filtre passe-bas 60 éliminant les signaux porteurs (fréquence de coupure par exemple égale à 10 MHz pour un signal porteur FI à 140 MHz et signaux modulants à 6 MHz). Les multiplieurs 64, 65 et 66 fournissent respectivement sgn(x).sgn(y).$P_d$, sgn(x).$P_d$ et sgn(y).$P_d$ à des filtres passe-bas 57, 55 et 54 respectivement. Ces filtres fournissent respectivement les estimations Sq, $S_{O_i}$ et $S_{O_q}$. L'estimation $S_q$ est ici appliquée à une diode varicap 67 alimentée en inverse pour faire fonction de capacité réglable et modifier la phase du signal porteur appliqué au mélangeur 15.

L'estimateur de l'invention est destiné plus particulièrement à être associé à un étage de modulation fonctionnant à un débit numérique et à une fréquence de signal porteur variables. Bien entendu, son intérêt est également important dans le cas d'un modulateur fonctionnant à fréquence fixe, pour compenser des variations de caractéristiques du modulateur dues par exemple à des variations de température ou au vieillissement.

L'invention s'applique notamment aux modulateurs utilisés dans les transmissions par faisceaux hertziens ou par satellites.

**Revendications**

1. Estimateur (58, 68) d'un défaut de fonctionnement d'un modulateur en quadrature comprenant deux mélangeurs (14, 15) auxquels sont appliqués deux signaux porteurs (P1, P2) ainsi qu'à chacun desdits mélangeurs (14, 15) un signal modulant (x, y), les signaux de sortie desdits mélangeurs (14, 15) étant appliqués à un sommateur (17) pour constituer un signal modulé (VS), **caractérisé en ce qu'**il comporte

   - des moyens de détection (51) de la puissance instantanée ($P_d$) dudit signal modulé (VS);
   - des moyens de multiplication (52, 53, 56, 64, 65, 66) de ladite puissance instantanée ($P_d$) détectée par l'un au moins desdits signaux modulants (x, y) ;

- des moyens d'intégration (54, 55, 57) du résultat de ladite multiplication,

lesdits moyens d'intégration (54, 55, 57) fournissant un signal ($C_{O_i}$, $C_{O_q}$, $C_q$, $S_q$, $S_{O_i}$, $S_{O_q}$) indicatif dudit défaut de fonctionnement dudit modulateur.

**2.** Estimateur selon la revendication 1, **caractérisé en ce que** ledit défaut de fonctionnement dudit modulateur est un résidu desdits signaux porteurs (P1, P2) dans ledit signal modulé (VS) et **en ce que** lesdits moyens de multiplication (52, 53, 65, 66) sont au nombre de deux pour multiplier ladite puissance instantanée ($P_d$) par chacun desdits signaux modulants (x, y) pour fournir, après intégration (54, 55), deux signaux ($C_{O_i}$, $C_{O_q}$, $S_{O_i}$, $S_{O_q}$) représentatifs dudit résidu de signaux porteurs (P1, P2) dans ledit signal modulé (VS).

**3.** Estimateur selon l'une des revendications 1 à 2, **caractérisé en ce que** lesdits signaux modulants (x, y) appliqués auxdits moyens de multiplication (52, 53, 56, 64, 65, 66) sont remplacés par leurs signes (sgn(x), sgn(y)).

**4.** Etage de modulation en quadrature, **caractérisé en ce qu'**il comporte un estimateur selon l'une des revendications 1 à 3.

**5.** Emetteur, **caractérisé en ce qu'**il comporte un étage de modulation selon la revendication 4.

**Patentansprüche**

**1.** Einschätzer (58, 68) für eine Funktionsstörung eines Quadraturmodulators mit zwei Mischern (14, 15), wobei an die Mischer zwei Trägersignale (P1, P2) sowie an jeden der Mischer (14, 15) ein modulierendes Signal (x, y) angelegt sind, wobei die Ausgangssignale der Mischer (14, 15) an einen Addierer (17) zum Erzeugen eines modulierten Signals (VS) angelegt sind,
**dadurch gekennzeichnet, dass** er umfasst:

- Mittel zum Erfassen (51) der momentanen Leistung ($P_d$) des modulierten Signals (VS) ;

- Mittel zum Multiplizieren (52, 53, 56, 64, 65, 66) der erfassten momentanen Leistung ($P_d$) mit wenigstens einem der modulierenden Signale (x, y);

- Mittel zum Integrieren (54, 55, 57) des Ergebnisses der Multiplikation;

wobei die Mittel zum Integrieren (54, 55, 57) ein Signal ($C_{Q_i}$, $C_{O_q}$, $C_q$, $S_q$, $S_{O_i}$, $S_{O_q}$) liefern, das die Funktionsstörung des Modulators anzeigt.

**2.** Einschätzer nach Anspruch 1, **dadurch gekennzeichnet, dass** die Funktionsstörung des Modulators ein Rest der Trägersignale (P1, P2) in dem modulierten Signal (VS) ist, und dass die Mittel zum Multiplizieren (52, 53, 65, 66) zweimal vorhanden sind, um die momentane Leistung ($P_d$) mit jedem der modulierenden Signale (x, y) zu multiplizieren, um nach Integration (54, 55) zwei Signale ($C_{O_i}$, $C_{O_q}$, $S_{O_i}$, $S_{O_q}$) zu liefern, die für den Rest der Trägersignale (P1, P2) in dem modulierten Signal (VS) repräsentativ sind.

**3.** Einschätzer nach einem der Ansprüche 1 bis 2, **dadurch gekennzeichnet, dass** die an die Mittel zum Multiplizieren (52, 53, 56, 64, 65, 66) angelegten modulierenden Signale (x, y) durch ihre Vorzeichen (sgn(x), sgn(y)) ersetzt sind.

**4.** Quadraturmodulationsstufe, **dadurch gekennzeichnet, dass** sie einen Einschätzer nach einem der Ansprüche 1 bis 3 umfasst.

**5.** Sender, **dadurch gekennzeichnet, dass** er eine Modulationsstufe nach Anspruch 4 umfasst.

**Claims**

**1.** An estimator (58, 68) for estimating an operating defect in a quadrature modulator including two mixers (14, 15) to which respective carrier signals (P1, P2) are applied, and to which respective modulating signals (x, y) are also applied, the output signals from said mixers (14, 15) being applied to a summing circuit (17) so as to constitute a modulated signal (VS), said estimator being **characterized in that** it comprises:

detection means (51) for detecting the instantaneous power ($P_d$) of said modulated signal (VS);
multiplication means (52, 53, 56, 64, 65, 66) for multiplying the detected instantaneous power ($P_d$) by at least one of said modulating signals ($\underline{x}$, $\underline{y}$); and
integration means (54, 55, 57) for integrating the result of said multiplication;
said integration means (54, 55, 57) supplying a signal ($C_{O_i}$, $C_{O_q}$, $C_q$, $S_q$, $S_{O_i}$, $S_{O_q}$) indicative of said operating defect of said modulator.

2. An estimator according to claim 1, **characterized in that** said operating defect of said modulator is that a residual amount of said carrier signals (P1, P2) remains in said modulated signal (VS), and **in that** there are two of said multiplication means (52, 53, 65, 66) so as to multiply said instantaneous power ($P_d$) by each of said modulating signals ($\underline{x}$, $\underline{y}$), so that, after integration (54, 55), two signals ($C_{O_i}$, $C_{O_q}$, $S_{O_i}$, $S_{O_q}$) are supplied that are representative of said residual amount of the carrier signals (P1, P2) in said modulated signal (VS).

3. An estimator according to any one of claims 1 to 2, **characterized in that** said modulating signals ($\underline{x}$, $\underline{y}$) applied to said multiplication means (52, 53, 56, 64, 65, 66) are replaced by their signs (sgn(x), sgn(y)).

4. A quadrature modulation stage, **characterized in that** it includes an estimator according to any one of claims 1 to 3.

5. A transmitter, **characterized in that** it includes a modulation stage according to claim 4.

# FIG.1

# FIG.2

# FIG.3

# FIG.4

# FIG.5

# FIG.6